# EUROPÄISCHE PATENTANMELDUNG

(11) **EP 4 333 267 A1**
(43) Veröffentlichungstag der Anmeldung: **06.03.2024**
(21) Anmeldenummer: 22192651.2
(22) Anmeldetag: 29.08.2022
(51) Int. Cl.: H02K 1/32, H02K 7/00, H02K 9/19

(54) **MODULARE ROTORWELLE MIT INTEGRIERTEN KÜHLKANÄLEN**

(71) Anmelder: Walter Henrich GmbH, 57567 Daaden (DE)
(72) Erfinder: ELLERSIEK, Thorsten, 33824 Werther (DE); STEINMETZ, Uwe, 57520 Steinebach/Sieg (DE)
(74) Vertreter: Bardehle Pagenberg Partnerschaft mbB Patentanwälte Rechtsanwälte

(57) **Zusammenfassung**

Die vorliegende Anmeldung betrifft eine modulare Rotorwelle für einen Rotor einer elektrischen Maschine mit integrierten Kühlkanälen. Die Rotorwelle umfasst ein Mantelrohr mit einem Innenprofil mit einer Vielzahl von Längsrillen, ein Innenrohr, das im Inneren des Mantelrohrs angeordnet ist, und einen ersten und einen zweiten Endstopfen, die jeweils an einem Ende des Mantelrohrs formschlüssig und kraftschlüssig oder formschlüssig und stoffschlüssig verbunden sind, indem sie in einen Teil der Vielzahl von Längsrillen eingreifen. Dabei definieren das Innenprofil des Mantelrohrs und die Außenseite des Innenrohrs eine Vielzahl von Kühlkanälen, durch die ein Kühlmedium entlang des Mantelrohrs strömen kann.

## Beschreibung

### 1. Technisches Gebiet

Die Erfindung betrifft eine modulare Rotorwelle für elektrische Maschinen wie Elektromotoren oder Generatoren mit integrierten Kühlkanälen.

### 2. Stand der Technik

Rotorwellen rotierender elektrischer Maschinen, beispielsweise eines Elektromotors oder eines Generators, erwärmen sich während ihrer Nutzung. Die entstehende Wärme kann beispielswiese auf die Stator- und / oder Rotorwicklungen übertragen werden. Dies kann zu unerwünschter Materialverformung führen und den Wirkungsgrad der elektrischen Maschine verringern. Um dies zu verhindern, kann der Erwärmung durch passive oder aktive Kühlung entgegengewirkt werden. Ein Beispiel dafür ist eine Luftkühlung, bei der Luft über und / oder durch die elektrische Maschine geleitet wird. Ein anderer Ansatz ist die aktive Kühlung des Rotors über ein flüssiges Kühlmedium.

Aus dem Stand der Technik sind unterschiedliche Rotorwellen mit aktiver Kühlung bekannt.

Beispielsweise beschreibt DE 10 2019 207 325 A1 eine Kühlanordnung für ein wärmeerzeugendes rotierendes Bauteil einer elektrischen Maschine: Eine drehbar gelagerte Hohlwelle, die drehfest mit der Rotorwelle verbunden ist, weist mindestens einen Kühlkanal für Kühlschmiermittel auf, wobei der mindestens eine Kühlkanal einen Hohlwellenkanal, einen Zufuhrkanal und einen Auslasskanal umfasst.

US 2020/0251963 A1 beschreibt eine elektrische Maschine, die eine einteilige hohle Rotorwelle umfasst, durch die ein flüssiges Kühlmittel strömen kann und in deren Inneren sich eine Vielzahl von Wärmeableitungsrippen befindet.

DE 10 2016 202 416 B4 offenbart eine Rotorwellenanordnung für einen Rotor eines Elektromotors, welche eine Hohlwelle zur Aufnahme eines Rotorkörpers und einen in der Hohlwelle angeordneten Kühlkörper aufweist, welcher sich radial erstreckende Kühlrippen aufweist und radial mit der Hohlwelle in thermischem Kontakt steht. Der Kühlkörper weist eine axial durchgehend offene Struktur auf, so dass ein Kühlmedium in der Hohlwelle axial durch den Kühlkörper hindurch strömen kann, wobei die offene Struktur durch definierte Kanäle gebildet ist.

DE 10 2017 112 348 A1 betrifft eine elektrische Maschine, die einen gegenüber einem Stator drehbaren Rotor mit wenigstens einer Rotorwelle und ein mit einem Kühlmittel durchströmbares Kanalsystem zur Kühlung der Maschine umfasst. Das Kanalsystem verläuft wenigstens abschnittsweise innerhalb der Rotorwelle. Dabei umfasst das Kanalsystem einen Kühlkanal, der in Längsrichtung der Rotorwelle wenigstens abschnittsweise konisch verlaufend ausgebildet, sodass das Kühlmittel durch eine Rotationsbewegung der Rotorwelle in Richtung eines zunehmenden Kanaldurchmessers förderbar ist.

Weiterer aus dem Stand der Technik bekannte Rotorwellen sind beschrieben in DE 11 2010 004 773 T5, US 9,148,041 B2, EP 3 384 581 B1, DE 10 2017 112 348 A1, DE 10 2020 207 431 A1, EP 3 507 889 B1, DE 10 2019 108 943 A1, EP 3 555 992 B1, EP 3 598 611 A1, EP 3 961 875 A1, US 7,579,725 B2, EP 1 953 896 B1, DE 10 2017 202 356 A1, US 9,331,552 B2, EP 3 303 039 B1, EP 3 673 568 B1, EP 3 501 085 B1, DE 10 2016 209 173 A1, EP 3 152 819 B1, DE 10 2016 208 770 B4 und EP 3 433 919 B1.

Die aus dem Stand der Technik bekannten Rotorwellen haben jedoch einige Nachteile. Insbesondere lassen sich einige der aus dem Stand der Technik bekannten Rotorwellen nur mit hohem Arbeitsaufwand, Materialverschleiß und folglich hohen Kosten fertigen. Ferner sind einige der bekannten Rotorwellenkühlstrukturen komplex, filigran und / oder vielteilig konstruiert, was einen erhöhten Ausschuss in der Fertigung und eine geringere Produktlebensdauern zur Folge haben kann.

Der vorliegenden Anmeldung liegt daher das Problem zugrunde, einige der beschriebenen Nachteile des Stands der Technik zumindest teilweise zu verringern.

### 3. Zusammenfassung der Erfindung

Das oben aufgeführte Problem wird zumindest teilweise durch den Gegenstand des unabhängigen Anspruchs gelöst. Beispielhafte Ausführungsformen sind in den abhängigen Ansprüchen beschrieben. Wo nicht anders angegeben sind Materialeigenschaften nach den einschlägigen Normen zu bestimmen.

In einer Ausführungsform stellt die vorliegende Erfindung eine Rotorwelle für einen Rotor einer elektrischen Maschine bereit. Die Rotorwelle umfasst ein Mantelrohr, das ein Innenprofil mit einer Vielzahl von Längsrillen aufweist, ein Innenrohr, das im Inneren des Mantelrohrs angeordnet ist sowie einen ersten und einen zweiten Endstopfen, die jeweils mit einem Ende des Mantelrohrs formschlüssig und kraftschlüssig oder formschlüssig und stoffschlüssig verbunden sind, indem sie in einen Teil der Vielzahl von Längsrillen eingreifen; wobei das Innenprofil des Mantelrohrs und die Außenseite des Innenrohrs eine Vielzahl von Kühlkanälen definieren, durch die ein Kühlmedium entlang des Mantelrohrs strömen kann.

Eine formschlüssige und kraftschlüssige bzw. eine formschlüssige und stoffschlüssige Verbindung umfasst im Zusammenhang dieser Anmeldung auch eine kombinierte form-, kraft- und stoffschlüssige Verbindung.

Durch diese Rohr-in-Rohr Konstruktion lässt sich der Aufbau und die Herstellung einer aktiv gekühlten Rotorwelle signifikant vereinfachen. Insbesondere können über den Formschluss und Kraftschluss zwischen dem profilierten Mantelrohr und den Endstopfen hohe Drehmomente übertragen werden und gleichzeitig mit dem Innenrohr die Kühlkanäle entlang der Längsrillen des Mantelrohrinnenprofils definiert werden. Diese Vereinfachung bringt mehrere Vorteile mit sich: Es wird kein zusätzliches Element zum Drehmomentübertrag benötigt, wodurch Material und Gewicht eingespart werden kann. Die Doppelfunktion des Innenprofils des Mantelrohrs, einerseits in der Definition der axial verlaufenden Kühlkanäle und andererseits im Form- und Kraftschluss durch Verzahnung mit den Endstopfen ermöglicht es, das Mantelrohr mit geringem Arbeitsaufwand und separat von den anderen Bauteilen der Rotorwelle herzustellen.

Bei Innenrohr und Mantelrohr kann es sich um kaltumgeformte, z.B. gezogene, Metallrohre handeln, die beispielsweise aus gängigen Werkstoffen wie E355 und 42CrMo4, Baustählen, Vergütungsstählen und / oder Einsatzstählen gefertigt sind. Die Endstopfen können beispielsweise geschmiedet oder additiv oder zerspannend gefertigt werden. Dadurch lässt sich das Herstellungsverfahren des Mantelrohrs auf einfache und günstige Weise ändern, um Mantelrohre in abgeänderten Ausführungsformen für neue Rotorwellen herzustellen, beispielsweise mit unterschiedlicher Länge, unterschiedlichem Durchmesser, Dicke und / oder Art und Tiefe der Profilierung. Insbesondere kann einer oder beide Endstopfen durch die form- bzw. kraftschlüssige Verbindung zum Mantelrohr bzw. dem Innenprofil des Mantelrohrs direkt zur Drehmomentübertragung verwendet werden, was den Aufbau der Rotorwelle signifikant vereinfacht.

Beispielsweise kann mindestens einer der beiden Endstopfen der Rotorwelle ein Drehmomentübertragungselement aufweisen. Durch diese Anordnung bleibt die Fertigung der anderen Komponenten der Rotorwelle, d.h. des Mantelrohrs, des Innenrohrs, des anderen Endstopfens und gegebenenfalls eines Kühlmediumführungsrohrs, von der konkreten Ausführung des Drehmomentübertragungselements unbeeinflusst.

Um die Fertigung des Mantelrohrs - beispielsweise über axiales Kaltumformen oder Kaltziehen von Rohren - sowie die Verbindung mit den Endstopfen zu vereinfachen, kann das Innenprofil des Mantelrohrs entlang des Umfangs des Mantelrohrs sich periodisch wiederholende - beispielsweise sinusförmige - Erhöhungen und Vertiefungen aufweisen. Zudem kann dadurch das Kühlmedium gleichmäßig zur Kühlung in der Rotorwelle verteilt werden.

Um formschlüssige Verbindung von Innenrohr und Mantelrohr zur Definition der Kühlkanäle in einfacher Weise zu realisieren, kann das Innenrohr in einen Teil der Vielzahl an Längsrillen eingreifen. Durch diese Anordnung ist keine ungewollte Positionierung und / oder Rotation des Innenrohrs und des Mantelrohrs relativ zueinander möglich. Des Weiteren können Innenrohr und Außenrohr in dieser Anordnung auf material- und arbeitssparende Weise verbunden werden. Zudem wird das Kühlmedium somit gleichmäßig zur Kühlung der Rotorwelle über die Rotorwelle verteilt.

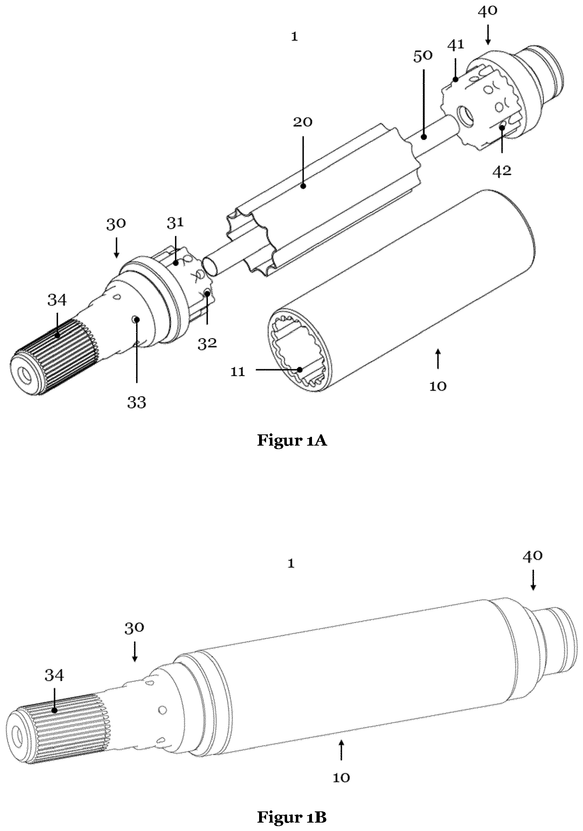

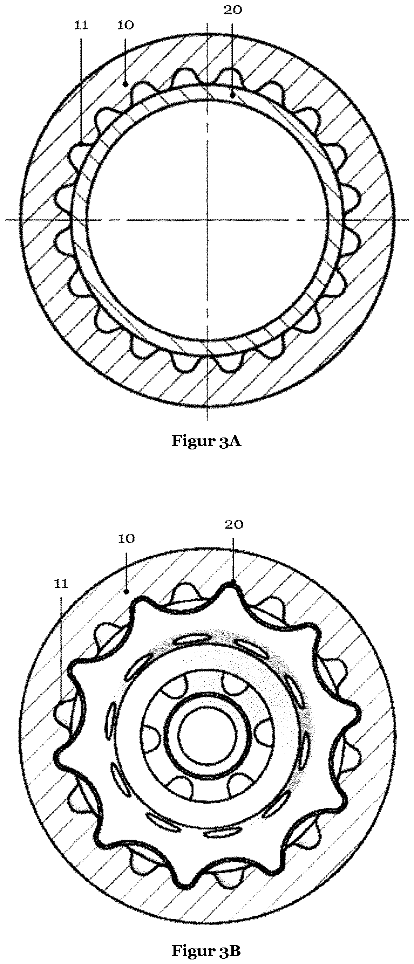

Beispielsweise kann das Innenrohr einen Querschnitt mit sich entlang seines Umfangs periodisch wiederholende Erhöhungen und Vertiefungen aufweisen, wobei die Erhöhungen des Innenrohrs in einen Teil der Längsrillen des Innenprofils des Mantelrohrs eingreifen (siehe auch Fig. 1A und 3B). Die sich periodisch wiederholenden Erhöhungen des Innenrohrs ermöglichen wie die mögliche periodische Profilierung des Mantelrohrs eine gleichmäßige Verteilung des Kühlmediums zur Kühlung der Rotorwelle. Ferner kann eine solche periodische Profilierung des Innenrohrs und des Mantelrohrs den Zusammenbau erleichtern, da es wegen der Symmetrie mehrere Relativpositionen gibt in der die beiden Profile ineinandergreifen.

In einer möglichen Ausführungsform weist das Mantelrohr eine maximale Wanddicke im Bereich von 2,00 mm bis 10,00 mm auf und / oder weist das Innenrohr eine Wanddicke im Bereich von 0,5 mm bis 5,00 mm auf. Diese Dickenbereiche erlauben es, einerseits hohe strukturelle Stabilität zum Übertrag hoher Drehmomente zu gewährleisten und andererseits materialsparende Bauteile zu fertigen. In diesem Dickenbereich kann für verschiedene Ausführungsformen, beispielsweise aber nicht ausschließlich für Rohre verschiedener Dicke, Profilierung oder Länge, das gleiche Herstellungsverfahren unter der Vornahme geringfügiger und günstiger Anpassungen verwendet werden.

Ferner kann in einer möglichen Ausführungsform das Innenprofil des Mantelrohrs eine Profiltiefe im Bereich von 1,00 mm bis 6,00 mm, bevorzugt im Bereich von 1,5 mm bis 3,5 mm, aufweisen und / oder das Innenrohr eine Profiltiefe im Bereich von 0,5 mm bis 4,00 mm, bevorzugt im Bereich von 1,5 mm bis 3,5 mm, aufweisen. Profiltiefen in diesen Bereichen zeichnen sich dadurch aus, dass das Strömungsverhalten des Kühlmediums hinsichtlich laminarer beziehungsweise turbulenter Dynamiken vorteilhaft und gemäß den Anforderungen an das jeweilige System eingestellt werden kann. Zudem können solche Profiltiefen ausreichende Drehfestigkeit für die Endstopfen gewährleisten, um hohe Drehmomente übertragen zu können. Insbesondere können solche Profiltiefen gewährleisten, dass sich trotz eines hohen Massestrom des Kühlmediums Turbulenzen ausbilden können, was die Effizienz der Kühlung optimiert.

Um die Verbindung der Endstopfen mit dem Mantelrohr zu verbessern, kann in einer möglichen Ausführungsform einer oder beide der Endstopfen ein Außenprofil aufweisen, das in das Innenprofil des Mantelrohrs eingreift und / oder die Endstopfen mit dem Mantelrohr verpresst sein. Die Verzahnung des Außenprofils der Endstopfen mit dem Innenprofil des Mantelrohrs nutzt eine vorteilhafte Ausführung des Formschlusses in Verwendung der vorhandenen Profilierung des Mantelrohrs zur Definierung der Kühlkanäle. Diese Art des Formschlusses ist materialsparend, da keine weiteren Befestigungsmittel nötig sind, und in der Herstellung arbeitssparend. Alternativ oder zusätzlich können die Endstopfen mit dem Mantelrohr auch verschweißt sein.

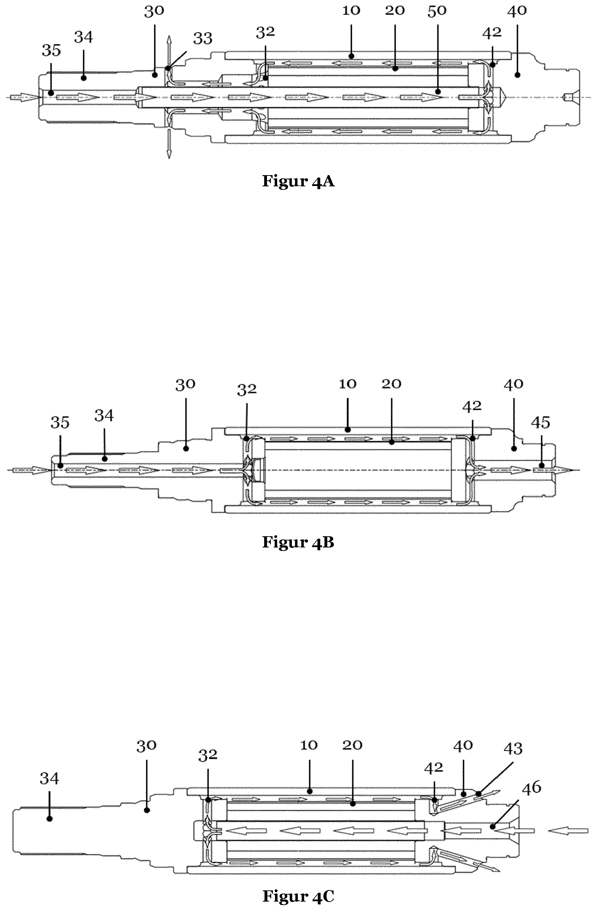

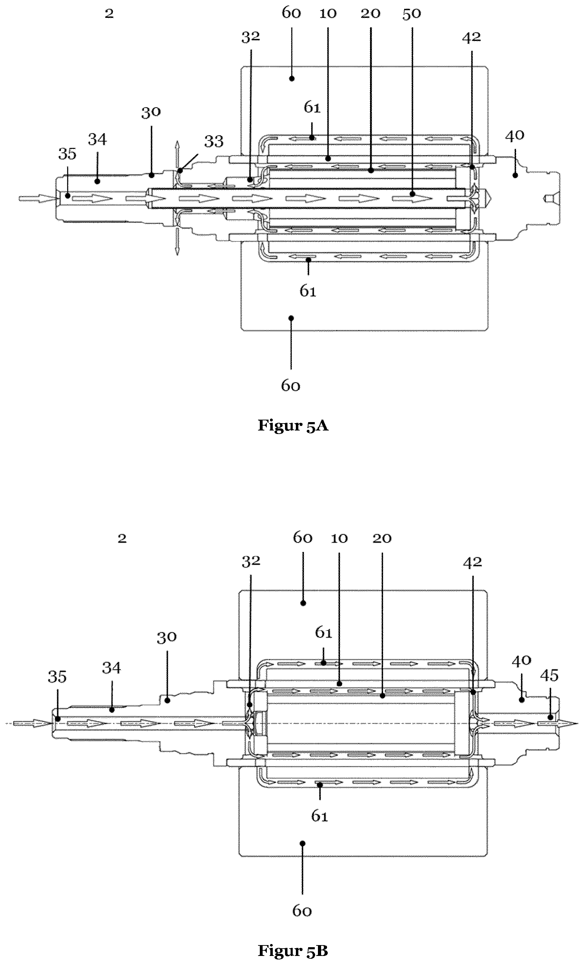

Um das Kühlmedium zu den durch Innenrohr und Mantelrohr definierten Kühlkanäle zu leiten, können in einigen Ausführungsformen die Endstopfen jeweils eine Kühlmediumverteilstruktur aufweisen, die mit einem der über das Innenprofil des Mantelrohrs und die Außenseite des Innenrohrs definierten Kühlkanälen verbunden ist. Dadurch ist keine zusätzliche Kühlmediumzuführung notwendig, die den Aufbau der Rotorwelle verkomplizieren würde und die Fertigung des Mantelrohrs und des Innenrohrs bleibt von der konkreten Ausführung der Kühlmediumzuführung weitestgehend unbeeinflusst. Zudem ermöglicht die Positionierung der Kühlmediumverteilstruktur in den Endstopfen verschiedene Architekturen der Kühlmediumleitung durch die Rotorwelle (siehe Fig. 4A, Fig. 4B und Fig. 4C) und gegebenenfalls durch weitere an die Rotorwelle angebrachte Elemente (siehe Fig. 5A und Fig. 5B), wie Elemente zur elektromagnetischen Kraftübertragung, wie z.B. durch ein Rotorblechpaket mit Permanentmagneten oder mit Rotorwicklungen.

Für die Kühlmediumleitung kann es aus Gründen der Zugänglichkeit für Zulauf- und Ablaufvorrichtungen in Abhängigkeit von der Anordnung der Rotorwelle von Vorteil sein, wenn in manchen Ausführungsformen einer der Endstopfen einen Zulauf für das Kühlmedium aufweist, der mit der Kühlmediumverteilstruktur verbunden ist und der andere Endstopfen einen Ablauf für das Kühlmedium aufweist, der mit der Kühlmediumverteilstruktur verbunden ist (siehe Fig. 4B und Fig. 5B)

Alternativ kann es in anderen möglichen Einsatzgebieten auch von Vorteil sein, wenn in anderen Ausführungsformen ein Kühlmediumführungsrohr innerhalb des Innenrohres angeordnet ist und die beiden Endstopfen derart miteinander verbindet, dass das Kühlmedium von einem Endstopfen zum anderen durch das Kühlmediumführungsrohr strömen kann und einer der Endstopfen einen Zulauf und einen Ablauf für das Kühlmedium aufweist, wobei der Ablauf mit der Kühlmediumverteilstruktur verbunden ist und der Zulauf mit dem Kühlmediumführungsrohr (siehe Fig. 4A, Fig. 4C und Fig. 5A).

In einer möglichen Ausführungsform der Rotorwelle weist der Endstopfen, der den Zulauf für das Kühlmedium aufweist, ebenfalls das Drehmomentübertragungselement auf. Diese Anordnung lässt sich vorteilhaft kombinieren, beispielsweise wenn sich der Zulauf für das Kühlmedium koaxial im Inneren des Drehmomentübertragungselements befindet. Generell können die einzelnen Bauteile so platz- und materialsparend angeordnet werden.

In einer weiteren Ausführungsform der Rotorwelle weist der Endstopfen, der das Drehmomentübertragungselement aufweist, keine externen Zu- oder Abläufe für das Kühlmedium auf (siehe Fig. 4C), was kompaktere Antriebssysteme ermöglicht.

Die vorliegende Anmeldung betrifft ferner einen Rotor für eine elektrische Maschine, der eine Rotorwelle wie vorstehend beschrieben und ein Element zur elektromagnetischen Kraftübertragung umfasst, das drehfest, bevorzugt kraftschlüssig, mit einem Teil der Außenfläche des Mantelrohrs verbunden ist. Somit befindet sich das Element zur elektromagnetischen Kraftübertragung in der Nähe der Kühlkanäle im Mantelrohr, was sich vorteilhaft auf die Temperatur im Element zur elektromagnetischen Kraftübertragung auswirken kann. Zudem wird so kein weiteres Trägerelement zur Befestigung des Elements zur elektromagnetischen Kraftübertragung benötigt. Das Element zur elektromagnetischen Kraftübertragung lässt sich somit über die Rotorkühlung mitkühlen, was insbesondere bei nichtpermanenterregten Maschinen, wie Asynchronmaschinen, den Wirkungsgrad der Maschine verbessert.

Um die Kühlung des Elements zur elektromagnetischen Kraftübertragung zu verbessern, kann es von Vorteil sein, wenn das Element zur elektromagnetischen Kraftübertragung ebenfalls mindestens einen Kühlkanal aufweist, der mit der Kühlmediumverteilstruktur beider Endstopfen verbunden ist (siehe Fig. 5A und Fig. 5B). So kann der Erwärmung des gesamten Rotors entgegengewirkt und ein noch höherer Wirkungsgrad erreicht werden.

Die vorliegende Anmeldung betrifft ferner eine Elektrische Maschine, die einen Stator und einen Rotor wie vorstehend beschrieben umfasst.

### 4. Kurzbeschreibung der Zeichnungen

Die Zeichnungen zeigen:
- **Fig. 1A**: eine Seitenansicht der Bestandteile einer Rotorwelle gemäß einer exemplarischen Ausführungsform der vorliegenden Erfindung;
- **Fig. 1B**: eine Seitenansicht der zusammengefügten Rotorwelle von Fig. 1A;
- **Fig. 2A**: eine Seitenansicht eines ersten Endstopfens gemäß einer möglichen Ausführungsform der vorliegenden Erfindung;
- **Fig. 2B**: eine Seitenansicht des ersten Endstopfens von Fig. 2A;
- **Fig. 2C**: eine Seitenansicht eines zweiten Endstopfens gemäß einer möglichen Ausführungsform der vorliegenden Erfindung;
- **Fig 2D**: eine Seitenansicht des zweiten Endstopfens von Fig. 2C;
- **Fig. 3A**: eine Querschnittsansicht einer Rotorwelle gemäß einer möglichen Ausführungsform mit einem runden Innenrohr ohne Profilierung;
- **Fig. 3B**: eine Querschnittsansicht einer Rotorwelle gemäß einer möglichen Ausführungsform mit einem profilierten Innenrohr, wobei die Erhöhungen der Profilierung des Innenrohrs in einige der Vertiefungen des Innenprofils des Mantelrohrs eingreifen;
- **Fig. 4A**: einen Längsschnitt durch eine Rotorwelle gemäß einer Ausführungsform mit zusätzlichem Kühlmittelführungsrohr;
- **Fig. 4B**: einen Längsschnitt durch die Rotorwelle gemäß einer Ausführungsform, ohne zusätzliches Kühlmittelführungsrohr;
- **Fig. 4C**: einen Längsschnitt durch eine Rotorwelle gemäß einer weiteren Ausführungsform mit zusätzlichem Kühlmittelführungsrohr;
- **Fig. 5A**: einen Längsschnitt einer Rotorwelle mit Kühlmittelführungsrohr und zusätzlichen Kühlkanälen in einem Element zur elektromagnetischen Kraftübertragung;
- **Fig. 5B**: einen Längsschnitt einer Rotorwelle ohne zusätzliches Kühlmittelführungsrohr und zusätzlichen Kühlkanälen in einem Element zur elektromagnetischen Kraftübertragung;
- **Fig. 6**: eine elektrische Maschine gemäß einer möglichen Ausführungsform mit einem Rotor wie hierin beschrieben und einem Stator.

### 5. Detaillierte Beschreibung einiger Ausführungsbeispiele

Im Folgenden werden einige exemplarische Ausführungsformen der vorliegenden Erfindung am Beispiel einiger exemplarischer Rotorwellen für elektrische Maschinen beschrieben. Hierbei sind verschiedenen Merkmalskombinationen mit Bezugnahme auf die dargestellten Ausführungsformen beschrieben. Naturgemäß müssen nicht alle Merkmale der beschriebenen Ausführungsformen vorhanden sein, um die vorliegende Erfindung zu realisieren. Ferner können die Ausführungsformen durch Kombinieren gewisser Merkmale einer Ausführungsform mit einem oder mehreren Merkmalen einer anderen Ausführungsform modifiziert werden - falls dies technisch kompatibel und sinnvoll ist - ohne von der Offenbarung und dem Schutzumfang der vorliegenden Erfindung abzuweichen, der durch die Patentansprüche definiert ist.

Fig. 1A zeigt eine Seitenansicht der Bestandteile einer Rotorwelle 1 nach einer möglichen Ausführungsform der vorliegenden Erfindung. Diese umfasst ein Mantelrohr 10, beispielsweise mit einer Wanddicke im Bereich von 2,00 mm bis 10,00 mm, mit einem periodischen Innenprofil 11, welches in der dargestellten Ausführungsform eine Vielzahl an axial verlaufenden Längsrillen aufweist. Die dargestellte Ausführungsform umfasst zudem ein Innenrohr 20, beispielsweise mit einer Wanddicke von 0,5 mm bis 5,00 mm, einen ersten Endstopfen 30, einen zweiten Endstopfen 40 und ein Kühlmediumführungsrohr 50. Der erste Endstopfen 30 kann ein Außenprofil 31 aufweisen und der zweite Endstopfen 40 kann ein Außenprofil 41 aufweisen. In der abgebildeten Ausführungsform weist der zweite Endstopfen 40 eine Kühlmediumverteilstruktur 42 für den Zulauf des Kühlmediums auf und der erste Endstopfen 30 weist die Kühlmediumverteilstruktur 32, 33 für den Ablauf des Kühlmediums auf. In der abgebildeten Ausführungsform weist der erste Endstopfen 30 ferner ein Drehmomentübertragungselement 34 auf, über das die Rotorwelle 1 beispielsweise mit einem anzutreibenden Rad, Propeller, Getriebe, oder Ähnlichem verbunden werden kann. Andere entsprechende Ausführungsformen können beispielsweise andere Innenprofile 11 des Mantelrohrs 10 und Außenprofile 31, 41 der Endstopfen 30, 40, andere Kühlmediumverteilstrukturen 32, 33, 42 und / oder andere Drehmomentübertragungselemente 34 umfassen und / oder können auf die Verwendung Kühlmediumführungsrohrs 50 verzichten.

Fig. 1B zeigt eine Seitenansicht der Rotorwelle 1 gemäß einer möglichen Ausführungsform, zusammengefügt aus den in Fig. 1A beschriebenen Bauteilen, in der das Mantelrohr 10 formschlüssig und kraftschlüssig mit dem ersten Endtopfen 30 und dem zweiten Endstopfen 40 verbunden ist, wobei der erste Endstopfen 30 ein Drehmomentübertragungselement 34 aufweisen kann. Die Verbindung zwischen Mantelrohr 10 und Endstopfen 30, 40 kann beispielsweise durch Verpressen der Endstopfen 30, 40 mit dem Mantelrohr 10 erfolgen, wobei der erste Endstopfen 30 und der zweite Endstopfen 40 jeweils in einen Teil der Vielzahl von Längsrillen des Innenprofils 11 des Mantelrohrs 10 eingreifen, beispielsweise sodass die Ehebungen der Außenprofile 31, 41 in die das Innenprofil 11 eingreifen. Das Innenrohr 20 und das Kühlmediumführungsrohr 50 befinden sich, in dieser Ansicht nicht sichtbar, koaxial mit dem Mantelrohr 10 im Inneren des Mantelrohrs 10 und zumindest teilweise zwischen dem ersten Endstopfen 30 und dem zweiten Endstopfen 40.

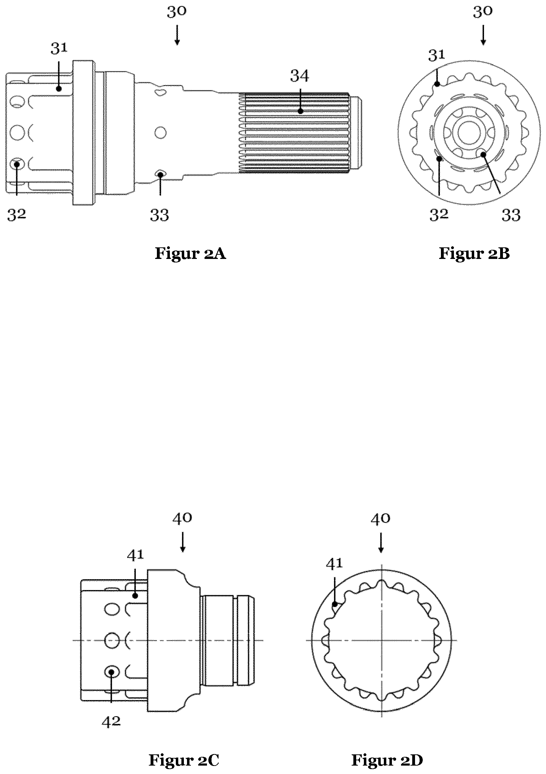

Figur 2A zeigt eine Seitenansicht des ersten Endstopfens 30 gemäß einer möglichen Ausführungsform, in welcher der erste Endtopfen 30 ein Außenprofil 31, eine Kühlemdiumverteilstruktur 32 und ein Drehmomentübertragungselement 34 aufweist. In dieser beispielhaften Ausführungsform weist das Außenprofil 31 des ersten Endstopfens 30 Längserhebungen auf, welche in Axialrichtung verlaufen und verschiedene Längen in axialer Richtung aufweisen, so dass das Kühlmedium von den Kühlkanälen, die durch das Innenrohr 20 und die Längsrillen gebildet werden, in die Kühlmediumverteilstruktur 32 eingeleitet werden kann.

Figur 2B zeigt eine weitere Ansicht des ersten Endstopfens 30 gemäß einer möglichen Ausführungsform mit Blickrichtung entlang der Axialrichtung. Die beispielhafte Ausführungsform weist ein Außenprofil 31 aus sich periodisch um den Umfang des ersten Endstopfens 30 wiederholende Erhebungen auf, wobei jeweils jede zweite Erhebung kürzer ist, um eine Fluidverbindung zwischen Kühlkanälen und Kühlmediumverteilstruktur 32 zu ermöglichen.

Fig. 2C zeigt eine Seitenansicht des zweiten Endstopfens 40 gemäß einer möglichen Ausführungsform, in welcher der zweite Endstopfen 40 ebenfalls ein Außenprofil 41 und eine Kühlmediumverteilstruktur 42 aufweist. In dieser beispielhaften Ausführungsform weist das Außenprofil 41 des zweiten Endstopfens 40, ähnlich wie vorstehend für den ersten Endstopfen 30 beschrieben, Längserhebungen in Axialrichtung auf, welche verschiedene Längen in axialer Richtung aufweisen.

Figur 2D zeigt eine weitere Ansicht des zweiten Endstopfens 40 gemäß einer möglichen Ausführungsform mit Blickrichtung entlang der Axialrichtung. Die beispielhafte Ausführungsform weist ein Außenprofil 41 aus sich periodisch um den Umfang des zweiten Endstopfens 40 wiederholende Erhebungen auf, wobei jeweils jede zweite Erhebung kürzer ist, um eine Fluidverbindung zwischen Kühlkanälen und Kühlmediumverteilstruktur 42 zu ermöglichen.

Figur 3A zeigt einen Querschnitt durch eine Rotorwelle 1 gemäß einer möglichen Ausführungsform mit einem runden Innenrohr 20 ohne Profilierung im zusammengebauten Zustand. In dieser beispielhaften Ausführungsform weist das Mantelrohr 10 eine sich periodisch um den Umfang des Mantelrohrs 10 wiederholende Abfolge von axial verlaufenden Erhebungen und Vertiefungen auf, welche das Innenprofil 11 des Mantelrohrs 10 bilden. Die Erhebungen des Innenprofils 11 stehen im Kontakt mit der Außenfläche des Innenrohrs 20. Die Freiräume in den Längsrillen bzw. Vertiefungen des Innenprofils 11, begrenzt durch das Mantelrohr 10 und das Innenrohr 20, definieren axial verlaufende Kühlkanäle zur Aufnahme eines Kühlmediums, wie Kühlwasser, Öl oder gar einem gekühlten Treibstoff, der danach einer Anlage zur Energieumwandlung zugeführt werden kann.

In einer anderen beispielhaften Ausführungsform zeigt Fig. 3B einen Querschnitt durch eine Rotorwelle 1 gemäß einer möglichen Ausführungsform mit einem profilierten Innenrohr 20, wobei die Erhöhungen der Profilierung des Innenrohrs 20 in einige der Vertiefungen bzw. Rillen des Innenprofils 11 des Mantelrohrs 10 greifen. In der gezeigten beispielhaften Ausführungsform sind die Erhebungen des Profils des Innenrohrs 20 so ausgeprägt, dass sie formschlüssig in jede zweite Vertiefung des Innenprofils 11 des Mantelrohrs 10 eingreifen und damit die Kühlkanäle in jeder anderen zweiten Längsrille des Innenprofils 11 des Mantelrohrs 10 verlaufen.

In einer möglichen Ausführungsform der Rotorwelle 1 kann das Innenprofil 11 des Mantelrohrs 10 eine Profiltiefe im Bereich von 1,00 mm bis 6,00 mm, bevorzugt im Bereich von 1,5 mm bis 3,5 mm, aufweisen und das Innenrohr 20 kann entweder gar kein Profil (siehe beispielsweise Fig. 3A) oder eine Profiltiefe im Bereich von 0,5 mm bis 4,00 mm, bevorzugt im Bereich von 1,5 mm bis 3,5 mm, aufweisen.

Fig. 4A zeigt einen Längsschnitt durch eine Rotorwelle 1 gemäß einer Ausführungsform, in der der erste Endstopfen 30 einen Zulauf 35 aufweist und den Ablauf 33 für das Kühlmedium aufweist, auf dem der Verlauf des Kühlmediums in der Rotorwelle 1 schematisch durch Pfeile dargestellt ist. In der beispielhaften Ausführungsform dargestellt in Fig. 4A weist der erste Endstopfen 30 einen Zulauf 35, über den das Kühlmedium in Pfeilrichtung im Inneren des ersten Endstopfens 30 geleitet wird. Durch das Kühlmediumführungsrohr 50, welches sich in der dargestellten möglichen Ausführungsform den Zulauf 35 des ersten Endstopfens 30 mit der Kühlmediumverteilstruktur 42 des zweiten Endstopfens 40 verbindet, gelangt das Kühlmedium entlang der dargestellten Pfeile in die Kühlmediumverteilstruktur 42. Diese leitet das Kühlmedium in zumindest teilweise radial verlaufenden Kanälen in die axial verlaufenden Kühlkanäle, definiert in den Freiräumen zwischen dem Mantelrohr 10 und dem Innenrohr 20. In der beispielhaft dargestellten Ausführungsform leiten die Kühlkanäle das Kühlmedium vom zweiten Endstopfen 40 zurück in Richtung des ersten Endstopfens 30. Die Kühlmediumverteilstruktur 32 des ersten Endstopfens 30 ist mit den Kühlkanälen verbunden und kann das Kühlmedium in das Innere des ersten Endstopfens 30 leiten. Der zweite Teil der Kühlmediumverteilstruktur 33 des ersten Endstopfens 30 stellt den Ablauf für das Kühlmedium dar. Damit befinden sich in dieser möglichen Ausführungsform Zulauf und Ablauf des Kühlmediums am gleichen Endstopfen 30, der in einigen Ausführungsformen auch ein Drehmomentübertragungselement aufweist.

Fig. 4B zeigt einen Längsschnitt durch die Rotorwelle 1 gemäß einer anderen möglichen Ausführungsform, bei der der erste Endstopfen 30 einen Zulauf 35 für das Kühlmedium aufweist, der mit der Kühlmediumverteilstruktur 32 verbunden ist und der zweite Endstopfen 40 einen Ablauf 45 für das Kühlmedium aufweist, der mit der Kühlmediumverteilstruktur 42 des zweiten Endstopfens 40 verbunden ist. Der Verlauf des Kühlmediums in der Rotorwelle 1 ist wiederum schematisch durch Pfeile dargestellt ist. In der dargestellten Ausführungsform gelangt das Kühlmedium in Pfeilrichtung durch den Zulauf 35 in das Innere des ersten Endstopfens 30. Der Zulauf 35 ist mit der Kühlmediumverteilstruktur 32 des ersten Endstopfens 30 verbunden, welche das Kühlmedium in zumindest teilweise radial verlaufenden Kanälen in die axial verlaufenden Kühlkanäle, definiert in den Freiräumen zwischen dem Mantelrohr 10 und dem Innenrohr 20, leitet. Die Kühlkanäle leiten das Kühlmedium vom ersten Endstopfen 30 zum zweiten Endstopfen 40, wo es von der Kühlmediumverteilstruktur 42 des zweiten Endstopfens 40 zum Ablauf 45 geleitet werden kann. Damit befinden sich in dieser möglichen Ausführungsform Zulauf und Ablauf des Kühlmediums an unterschiedlichen Endstopfen.

Fig. 4C zeigt einen Längsschnitt durch eine Rotorwelle 1 gemäß einer Ausführungsform, bei der der zweite Endstopfen 40 einen Zulauf 46 und einen Ablauf 43 für das Kühlmedium aufweist. Der Verlauf des Kühlmediums in der Rotorwelle 1 ist wiederum schematisch durch Pfeile dargestellt ist. In der dargestellten Ausführungsform wird das Kühlmedium in Pfeilrichtung über den Zulauf 46 in das Innere des zweiten Endstopfens 40 geleitet. Durch das Kühlmediumführungsrohr 50, welches in der dargestellten Ausführungsform den Zulauf 46 des zweiten Endstopfens 40 mit der Kühlmediumverteilstruktur 32 des ersten Endstopfens 30 verbindet, gelangt das Kühlmedium entlang der dargestellten Pfeile in die Kühlmediumverteilstruktur 32 des ersten Endstopfens 30. Diese Kühlmediumverteilstruktur 32 leitet das Kühlmedium in zumindest teilweise radial verlaufenden Kanälen in die axial verlaufenden Kühlkanäle, definiert in den Freiräumen zwischen dem Mantelrohr 10 und dem Innenrohr 20. In der dargestellten Ausführungsform leiten die Kühlkanäle das Kühlmedium vom ersten Endstopfen 30 zurück in Richtung des zweiten Endstopfens 40. Die Kühlmediumverteilstruktur 42 des zweiten Endstopfens 40 ist ebenfalls mit den axialen Kühlkanälen verbunden und kann das Kühlmedium in das Innere des zweiten Endstopfens 40 leiten. Die Kühlmediumverteilstruktur 42 des zweiten Endstopfens 40 leitet das Kühlmedium zu einen Ablauf 43, über den das Kühlmedium aus dem zweiten Endstopfen 40 austritt. Damit befinden sich in dieser möglichen Ausführungsform Zulauf und Ablauf des Kühlmediums am zweite Endstopfen 40. Dies hat u.a. den Vorteil, dass der erste Endstopfen 30, der das Drehmomentübertragungselement 34 aufweist, keine Anschlüsse für das Kühlmedium benötigt, was u.a. zu verbesserten mechanischen Eigenschaften des ersten Endstopfens 30 und Platzersparnis für ein elektrisches Antriebssystem führen kann - z.B. einen Direktantrieb für KFZ-Räder oder einen Antrieb für einen Flugzeugpropeller - , in dem eine solche aktiv gekühlte Rotorwelle 1 verwendet wird.

Fig. 5A zeigt einen Längsschnitt durch die Ausführungsform einer Rotorwelle 1, bei der der erste Endstopfen 30 den Zulauf 35 und den Ablauf 33 für das Kühlmedium aufweist und ein Element zur elektromagnetischen Kraftübertragung 60, das drehfest, bevorzugt kraftschlüssig, mit einem Teil der Außenfläche des Mantelrohrs 10 verbunden ist. Der Verlauf des Kühlmediums in der Rotorwelle 1 und im Element zur elektromagnetischen Kraftübertragung 60 ist wiederum schematisch durch Pfeile dargestellt ist. Die Rotorwelle 1 samt Element zur elektromagnetischen Kraftübertragung 60, welches eigene Kühlkanäle 61 aufweisen kann, stellt einen Rotor 2 einer rotierenden elektrischen Maschine 3 dar. In der in Figur 5A dargestellten möglichen Ausführungsform kann das Kühlmedium über den Zulauf 35 in den ersten Endstopfen 30 gelangen. Durch ein Kühlmediumführungsrohr 50, welches sich in der dargestellten möglichen Ausführungsform den Zulauf 35 des ersten Endstopfens 30 mit der Kühlmediumverteilstruktur 42 des zweiten Endstopfens 40 verbindet, gelangt das Kühlmedium entlang der dargestellten Pfeile in die Kühlmediumverteilstruktur 42 des zweiten Endstopfens 40. Diese leitet das Kühlmedium in zumindest teilweise radial verlaufenden Kanälen in die axial verlaufenden Kühlkanäle, definiert in den Freiräumen zwischen dem Mantelrohr 10 und dem Innenrohr 20 und in die Kühlkanäle 61 des Elements zur elektromagnetischen Kraftübertragung 60. Über die Kühlkanäle kann das Kühlmedium vom zweiten Endstopfen 40 zum ersten Endstopfen 30 gelangen, wo es von der Kühlmediumverteilstruktur 32 des ersten Endstopfens 30 aufgenommen und zum Ablauf 33 geleitet werden kann. Damit befinden sich in dieser möglichen Ausführungsform Zulauf und Ablauf des Kühlmediums am gleichen Endstopfen.

Fig. 5B zeigt einen Längsschnitt durch die Ausführungsform der Rotorwelle 1, in der der erste Endstopfen 30 einen Zulauf 35 für das Kühlmedium aufweist, der mit der Kühlmediumverteilstruktur 32 des ersten Endstopfens 30 verbunden ist und der zweite Endstopfen 40 einen Ablauf 45 für das Kühlmedium aufweist, der mit der Kühlmediumverteilstruktur 42 verbunden ist und ein Element zur elektromagnetischen Kraftübertragung 60, das drehfest, bevorzugt kraftschlüssig, mit einem Teil der Außenfläche des Mantelrohrs 10 verbunden ist, auf dem der Verlauf des Kühlmediums in der Rotorwelle und im Element zur elektromagnetischen Kraftübertragung schematisch durch Pfeile dargestellt ist. Die Rotorwelle 1 samt Element zur elektromagnetischen Kraftübertragung 60, welches eigene Kühlkanäle 61 aufweisen kann, stellt den Rotor 2 dar. Über alle Kühlkanäle kann das Kühlmedium vom ersten Endstopfen 30 zum zweiten Endstopfen 40 gelangen, wo es von der Kühlmediumverteilstruktur 42 des zweiten Endstopfens 30 aufgenommen und zum Ablauf 45 geleitet werden kann. Damit befinden sich in dieser möglichen Ausführungsform Zulauf und Ablauf des Kühlmediums an unterschiedlichen Endstopfen.

Ein Element zur elektromagnetischen Kraftübertragung 60 mit eigenen Kühlkanälen 61 lässt sich auch mit der Ausführungsform von Fig. 4C kombinieren.

Die in Fig. 4A, Fig. 4B, Fig. 4C, Fig. 5A und Fig. 5B dargestellten Ausführungsformen sind mögliche Beispiele der vorliegenden Erfindung. Weitere mögliche Ausführungsformen können beispielsweise einen Zulauf und einen Ablauf für das Kühlmedium am zweiten Endstopfen 40 aufweisen oder einen Zulauf am zweiten Endstopfen 40 und einen Ablauf am ersten Endstopfen 30 aufweisen. Ausführungen mit mehreren Zuläufen und / oder mehreren Abläufen und / oder Ausführungen mit einer Leitung des Kühlmediums entgegen der dargestellten Pfeilrichtung sowie andere nicht genannte Ausführungsformen sind ebenfalls möglich.

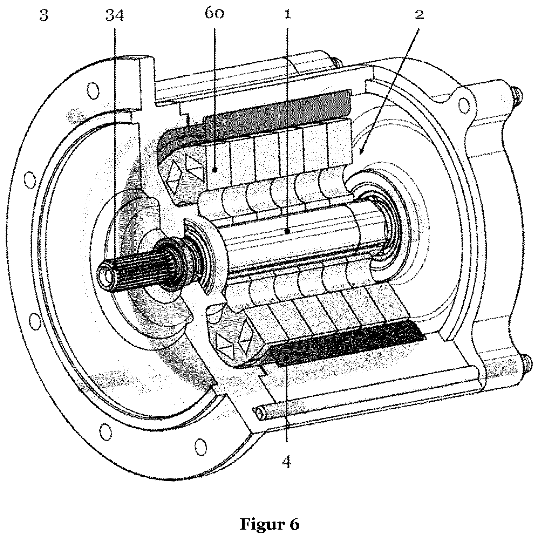

Fig. 6 zeigt eine Elektrische Maschine 3 gemäß einer möglichen Ausführungsform mit einem Rotor 2 und einem Stator 4. Der Rotor 2, umfassend eine Rotorwelle 1 und ein Element zur elektromagnetischen Kraftübertragung 60, das drehfest, bevorzugt kraftschlüssig, mit der Rotorwelle 1 verbunden ist, gemäß eines der zuvor beschriebenen Ausführungsbeispiele oder gemäß einer anderen Ausführung, ist gegen den Stator 4 rotierbar und weist ein Drehmomentübertragungselement 34 auf. Einer der Endstopfen kann in einer möglichen Ausführungsform durch die form- oder kraftschlüssige Verbindung zum Mantelrohr 10 oder Innenprofil 11 des Mantelrohrs 10 zur Drehmomentübertragung verwendet werden.

## Patentansprüche

1. Rotorwelle für einen Rotor einer elektrischen Maschine, aufweisend:
ein Mantelrohr, das ein Innenprofil mit einer Vielzahl von Längsrillen aufweist;
ein Innenrohr, das im Inneren des Mantelrohrs angeordnet ist; und
ein erster und ein zweiter Endstopfen, die jeweils mit einem Ende des Mantelrohrs formschlüssig und kraftschlüssig oder formschlüssig und stoffschlüssig verbunden sind, indem sie in einen Teil der Vielzahl von Längsrillen eingreifen;
wobei das Innenprofil des Mantelrohrs und die Außenseite des Innenrohrs eine Vielzahl von Kühlkanälen definieren, durch die ein Kühlmedium entlang des Mantelrohrs strömen kann.

2. Rotorwelle nach Anspruch 1, wobei mindestens einer der beiden Endstopfen ein Drehmomentübertragungselement aufweist.

3. Rotorwelle nach einem der vorherigen Ansprüche,
wobei das Innenprofil des Mantelrohrs entlang des Umfangs des Mantelrohrs sich periodisch wiederholende Erhöhungen und Vertiefungen aufweist.

4. Rotorwelle nach einem der vorherigen Ansprüche,
wobei das Innenrohr in einen Teil der Vielzahl an Längsrillen eingreift.

5. Rotorwelle nach dem vorherigen Anspruch 4, wobei das Innenrohr einen Querschnitt mit sich entlang seines Umfangs periodisch wiederholende Erhöhungen und Vertiefungen aufweist und die Erhöhungen in den Teil der Längsrillen des Innenprofils des Mantelrohrs eingreifen.

6. Rotorwelle nach einem der vorherigen Ansprüche,
wobei das Mantelrohr eine Wanddicke im Bereich von 2,00 mm bis 10,00 mm aufweist; und / oder
wobei das Innenrohr eine Wanddicke im Bereich von 0,5 mm bis 5,00 mm aufweist.

7. Rotorwelle nach einem der vorherigen Ansprüche, wobei das Innenprofil des Mantelrohrs eine Profiltiefe im Bereich von 1,00 mm bis 6,00 mm, bevorzugt im Bereich von 1,5 mm bis 3,5 mm, aufweist und / oder
wobei das Innenrohr eine Profiltiefe im Bereich von 0,5 mm bis 4,00 mm, bevorzugt im Bereich von 1,5 mm bis 3,5 mm, aufweist.

8. Rotorwelle nach einem der vorherigen Ansprüche,
wobei einer oder beide der Endstopfen ein Außenprofil aufweist, das in das Innenprofil des Mantelrohrs eingreift; und / oder
wobei die Endstopfen mit dem Mantelrohr verpresst sind; und / oder
wobei die Endstopfen mit dem Mantelrohr verschweißt sind.

9. Rotorwelle nach einem der vorherigen Ansprüche,
wobei die Endstopfen jeweils eine Kühlmediumverteilstruktur aufweisen, die mit einem der der über das Innenprofil des Mantelrohrs und die Außenseite des Innenrohrs definierten Kühlkanälen verbunden ist.

10. Rotorwelle nach Anspruch 9,
wobei einer der Endstopfen einen Zulauf für das Kühlmedium aufweist, der mit der Kühlmediumverteilstruktur verbunden ist und der andere Endstopfen einen Ablauf für das Kühlmedium aufweist, der mit der Kühlmediumverteilstruktur verbunden ist.

11. Rotorwelle nach Anspruch 9, ferner aufweisend
ein Kühlmediumführungsrohr, das innerhalb des Innenrohres angeordnet ist und die beiden Endstopfen derart miteinander verbindet, dass das Kühlmedium von einem Endstopfen zum anderen durch das Kühlmediumführungsrohr strömen kann; und
wobei einer der Endstopfen einen Zulauf und einen Ablauf für das Kühlmedium aufweist, wobei der Ablauf mit der Kühlmediumverteilstruktur verbunden ist und der Zulauf mit dem Kühlmediumführungsrohr.

12. Rotorwelle nach Anspruch 2 und Anspruch 10 oder 11, wobei der Endstopfen, der den Zulauf für das Kühlmedium aufweist, ebenfalls das Drehmomentübertragungselement aufweist.

13. Rotor für eine elektrische Maschine aufweisend:
eine Rotorwelle nach einem der vorherigen Ansprüche 1 bis 12; und
ein Element zur elektromagnetischen Kraftübertragung, das drehfest, bevorzugt kraftschlüssig, mit einem Teil der Außenfläche des Mantelrohrs verbunden ist.

14. Rotor nach Anspruch 13 aufweisend eine Rotorwelle nach einem der vorherigen Ansprüche 9 bis 12, wobei das Element zur elektromagnetischen Kraftübertragung mindestens einen Kühlkanal aufweist, der mit der Kühlmediumverteilstruktur beider Endstopfen verbunden ist.

15. Elektrische Maschine, aufweisend:
einen Stator; und
einen Rotor nach einem der Ansprüche 13 oder 14.
